# FASCICULE DE BREVET EUROPEEN

(11) **EP 3 620 685 B1**
(45) Date de publication et mention de la délivrance du brevet: **29.09.2021**
(21) Numéro de dépôt: 19194516.1
(22) Date de dépôt: 30.08.2019
(51) Int. Cl.: F16H 55/06, F16H 55/12

(54) **ORGANE DE TRANSMISSION DE PUISSANCE**
LEISTUNGSÜBERTRAGUNGSORGAN
POWER TRANSMISSION MEMBER

(30) Priorité: 31.08.2018 FR 1857856
(43) Date de publication de la demande: 11.03.2020
(73) Titulaire: Safran Transmission Systems, 92700 Colombes (FR)
(72) Inventeur: GOUIN, Gilles, Gaston, Jacques, 77550 MOISSY-CRAMAYEL (FR)
(74) Mandataire: Ernest Gutmann - Yves Plasseraud S.A.S.

(56) Documents cités:
- US-A- 1 492 145
- US-A1- 2018 180 159

## Description

### DOMAINE

La présente invention concerne un organe de transmission de puissance, plus particulièrement formé en deux matériaux.

### CONTEXTE

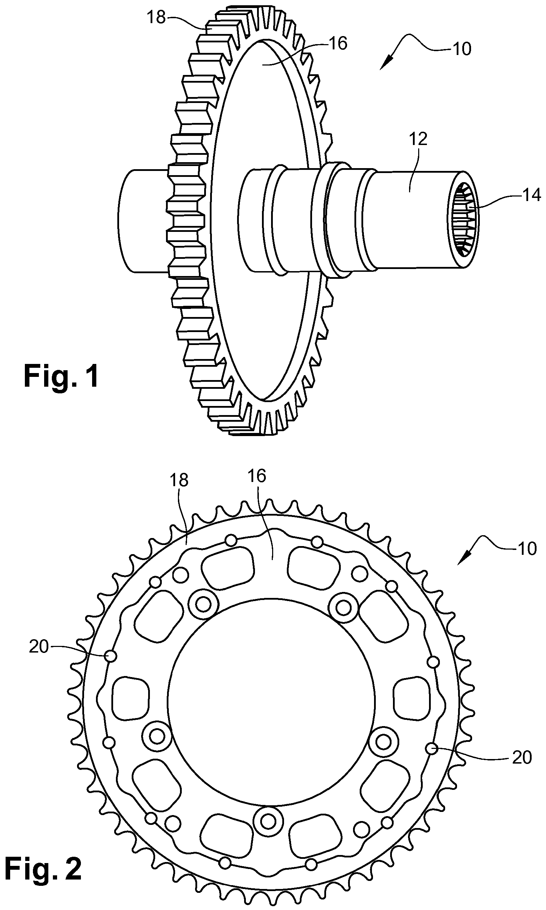

La figure 1 illustre un organe annulaire de transmission de puissance 10 monobloc d'un type connu qui est réalisé dans un seul matériau, tel que de l'acier. Il comprend un fût 12 tubulaire comportant des cannelures 14 internes pour l'accouplement de l'organe de transmission de puissance à un arbre comportant des cannelures correspondantes. Un voile 16 annulaire relie radialement le fût à une partie annulaire radialement externe comportant une denture 18 annulaire. Bien évidemment, la denture 18 et les cannelures 14 pourraient être dissociées dans deux organes de transmission de puissance distincts 10.

En fonctionnement, les cannelures 14 et la denture 18 assurent une transmission de puissance qui impose la réalisation de ces parties dans des matériaux à forte résistance mécanique, ce qui explique que l'on fabrique habituellement un organe de transmission de puissance 10 en acier. Toutefois, de tels organes de transmission de puissance 10 s'avèrent relativement lourd.

Ainsi, il a alors été proposé de réaliser un organe de transmission de puissance 10 en deux matériaux. L'organe de transmission de puissance 10 illustré en figure 2 est ici une roue dentée qui comprend un voile 16 annulaire réalisé en aluminium et une denture 18 réalisée en acier. Le voile 16 annulaire et la denture 18 sont fixés rigidement l'un à l'autre par vissage 20.

Si le principe de réalisation d'un organe de transmission de puissance en deux matériaux est intéressant, la réalisation proposée s'avère problématique puisque cela impose l'intégration d'un assemblage par vissage. Cette technologie n'est pas souhaitable car elle impose des usinages de centrage du fût 12 avec le voile 16 pour réaliser leur assemblage et garantir leur coaxialité. Ces usinages de centrage visent à réaliser une face annulaire radialement externe du fût 12 et une face annulaire radialement interne sur le voile 16, la face annulaire radialement externe du fût 12 et la face radialement interne du voile 16 étant destinées à coopérer ensemble pour former un centrage du voile 16 sur le fût 12.

Les usinages comprennent en outre la réalisation de perçages répartis circonférentiellement et traversant le voile 16 et la denture 18. Les perçages sont traversés par des vis 20 de fixation. Cet assemblage comprenant une pluralité de points de fixation élémentaires pose un problème de fiabilité pouvant conduire à un désassemblage du voile 16 et de la denture 18.

En outre, le montage et la maintenance de l'organe de transmission de puissance nécessite une traçabilité de ses pièces constitutives, i.e. le fût 12, le voile 16, la denture 18 et les vis 20 de fixation. Une telle traçabilité implique une logistique importante et coûteuse.

Le document US2018/180159A1 décrit une roue dentée formée de plusieurs pièces assemblées les unes aux autres.

Le document US1492145A décrit une roue dentée comprenant deux flasques entre lesquels est disposé une portion centrale qui porte extérieurement des moyens de transmission de couple.

L'invention vise à proposer une solution permettant de réaliser un organe annulaire de transmission de puissance permettant de surmonter tout ou partie des inconvénients mentionnés précédemment.

### RESUME DE L'INVENTION

Le présent document concerne un organe annulaire de transmission de puissance d'axe longitudinal comprenant une première pièce annulaire, une deuxième pièce annulaire comprenant des moyens de transmission de couple et une troisième pièce annulaire solidaires les unes des autres, la première pièce annulaire et la troisième pièce annulaire étant réalisées dans un premier matériau métallique, la deuxième pièce annulaire étant réalisée dans un second matériau métallique ayant une densité supérieure à la densité du premier matériau métallique, la deuxième pièce bloquée longitudinalement entre la première pièce annulaire et la troisième pièce annulaire et radialement au moins l'une de la première pièce annulaire et de la troisième pièce annulaire.

La première pièce annulaire peut être en contact avec la troisième pièce annulaire. La première pièce annulaire peut être fixée directement à la troisième pièce annulaire. La première pièce annulaire peut être soudée à la troisième pièce annulaire.

On réalise l'organe de transmission de puissance en trois pièces structurellement distinctes les unes des autres. Seule la deuxième pièce annulaire comprenant des moyens de transmission de couple impose d'être réalisée dans un matériau à plus grande densité, la première pièce et la troisième pièce étant réalisées dans des matériaux moins denses, ce qui permet d'alléger la masse de l'organe de transmission de puissance. La première pièce annulaire et la troisième pièce annulaire sont ainsi dépourvues de moyens de transmission de couple.

Par ailleurs, le blocage de la deuxième pièce annulaire avec la première pièce annulaire et la troisième pièce annulaire est formé par butée axiale de la deuxième pièce annulaire sur les premières et troisièmes pièces annulaires. Ces butées axiales permettent d'empêcher un déplacement axial de la deuxième pièce et réalise ainsi un ensemble rigide.

La soudure de la première pièce à la troisième pièce peut être réalisée par friction malaxage. Ce type de soudure permet de réaliser une liaison rigide entre deux pièces métalliques sans matériau d'apport.

Une telle technique de soudage permet de souder ensemble des matériaux métalliques considérés non soudables par des techniques de soudures traditionnelles, ce qui est le cas des nouveaux types d'alliages d'aluminium. Plus spécifiquement, la soudure par friction malaxage est une soudure en phase solide réalisée à des températures inférieures à la température de fusion d'un matériau et évite par conséquent la formation de défauts liés à une soudure traditionnelle. Par exemple, les défauts liés à une mauvaise solidification du bain fondu peuvent être la formation de porosités ou de fissures.

La soudure par friction malaxage est considérée comme l'unique procédé capable de souder les alliages aluminium aéronautique de dernière génération.

Enfin, la soudure par friction malaxage permet d'obtenir des joints soudés aux caractéristiques mécaniques élevées, généralement supérieures à celles des soudures obtenues au moyen des techniques traditionnelles par fusion.

La deuxième pièce annulaire peut coopérer par liaison de forme avec au moins l'une de la première pièce et de la troisième pièce pour le blocage en rotation de la deuxième pièce avec les première et deuxième pièces annulaires.

La présence de moyens de coopération par liaison de forme entre la deuxième pièce annulaire et la première et/ou la troisième pièce annulaire permet ainsi d'empêcher toute rotation de la deuxième pièce annulaire et de la bloquer sur les première et troisième pièces annulaires.

La troisième pièce peut comprendre une partie annulaire en contact annulaire radial avec la première pièce annulaire et portant des doigts engagés dans des logements de la deuxième pièce annulaire.

Les moyens de coopération par liaison de forme peuvent être constitués par un engagement des doigts de la troisième pièce annulaire dans des ouvertures formant des logements de la deuxième pièce annulaire.

La première pièce annulaire peut comprendre un épaulement annulaire sur lequel la deuxième pièce annulaire est appliquée longitudinalement, la troisième pièce annulaire étant agencée longitudinalement à l'opposé de l'épaulement par rapport à la deuxième pièce annulaire.

Dans un mode de réalisation particulier, les doigts peuvent traverser la deuxième pièce annulaire, les extrémités des doigts étant soudées sur l'épaulement annulaire.

Les soudures au niveau des extrémités des doigts en contact avec l'épaulement de la première pièce annulaire ainsi que la soudure entre la paroi au niveau du contact radial entre la première pièce annulaire et la troisième pièce annulaire permettent de rigidifier la liaison entre les première et troisième pièces annulaires qui maintiennent en position la deuxième pièce annulaire.

La soudure des doigts est préférentiellement une soudure par friction malaxage, et plus particulièrement par transparence qui consiste à insérer un mandrin rotatif au travers de la première pièce jusqu'à venir en contact avec les extrémités des doigts et ainsi souder la première pièce annulaire avec au moins les doigts de la troisième pièce annulaire.

Les moyens de transmission de couple peuvent être orientés radialement vers l'extérieur, la troisième pièce annulaire entourant une surface cylindrique de la première pièce annulaire et fixée par soudure à celle-ci.

Les moyens de transmission de couple peuvent ainsi être une denture s'étendant à partir de l'extrémité radialement du voile de l'organe de transmission de puissance.

La troisième pièce annulaire peut comprendre un bord annulaire soudé à un bord annulaire de la première pièce annulaire.

L'agencement et le soudage entre la première pièce annulaire et la troisième pièce sont réalisés de manière à ce que le bord annulaire de la première et le bord annulaire de la troisième pièce annulaire forment une continuité de surface, sans décrochement. Préférentiellement, cette soudure peut être du type bord à bord.

Les moyens de transmission de couple peuvent être orientés radialement vers l'intérieur, la troisième pièce annulaire étant montée à l'intérieur d'une surface cylindrique de la première pièce et fixée par soudure à celle-ci

Les moyens de transmission de couple peuvent ainsi être des cannelures s'étendant radialement vers l'intérieur à partir d'une surface radialement interne d'un fût.

Dans une réalisation pratique, le premier matériau métallique peut être un alliage d'aluminium. Le second matériau métallique peut être un acier. L'indication que la première pièce annulaire et la troisième pièce annulaire sont réalisées dans un premier matériau métallique n'indique pas que le matériau est strictement le même pour la première pièce annulaire et la troisième pièce annulaire.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1, déjà décrite précédemment, est une vue en perspective d'un premier organe de transmission de puissance selon l'art antérieur ;
- la figure 2, déjà décrite précédemment, est une vue de face d'un second organe de transmission de puissance selon l'art antérieur ;
- la figure 3A est une demi vue en coupe de l'organe de transmission de puissance selon l'invention selon un premier mode de réalisation, selon un plan de coupe comprenant l'axe de l'organe de transmission et ne passant pas par un doigt de la troisième pièce annulaire ;
- la figure 3B est une demi vue de l'organe de transmission de puissance illustré en figure 3A, selon un plan de coupe comprenant l'axe de l'organe de transmission de puissance et passant par l'un des doigts de la troisième pièce;
- la figure 4A est une vue de face de la troisième pièce de l'organe de transmission de puissance selon un premier mode de réalisation de l'invention ;
- la figure 4B est une vue de côté de la troisième pièce de la figure 4A ;
- la figure 5 est une vue en coupe de l'organe de transmission de puissance selon un second mode de réalisation de l'invention ;
- la figure 6 est une vue en perspective de la troisième pièce de l'organe de transmission de puissance selon le second mode de réalisation de l'invention ;
- la figure 7 est une vue en coupe illustrant un parcours de soudage selon le second mode de réalisation de l'invention.

### DESCRIPTION DETAILLEE

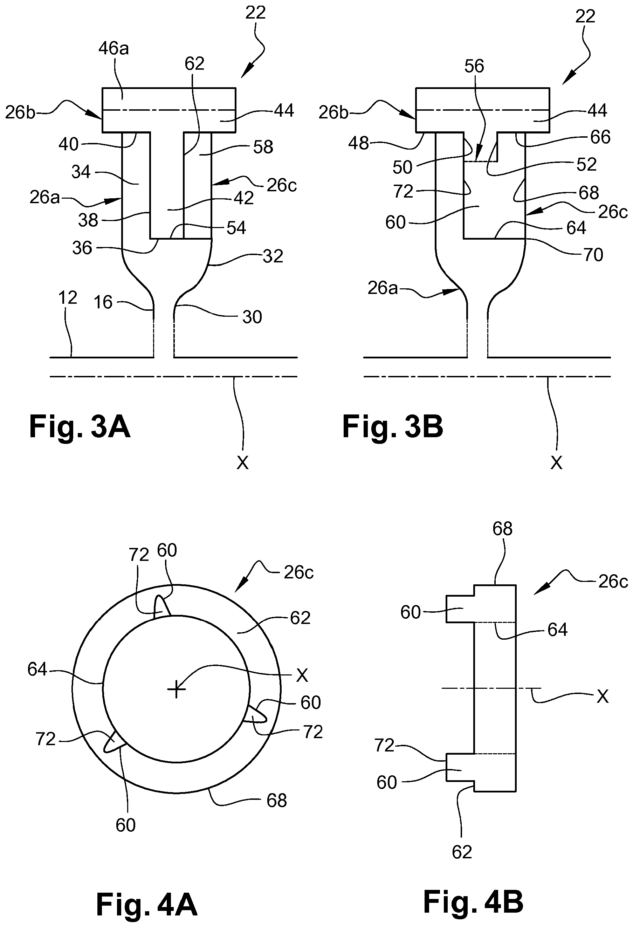

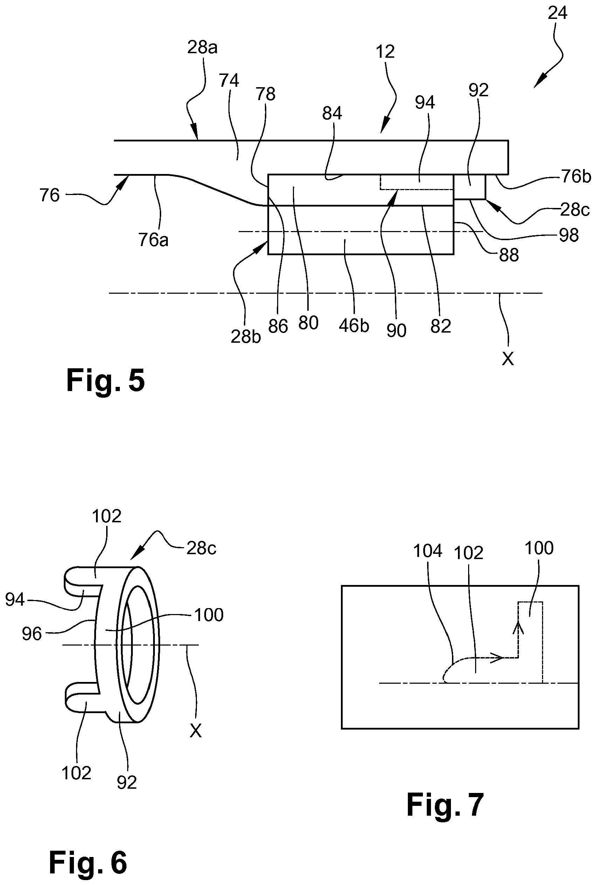

Nous allons maintenant décrire deux modes de réalisation de l'invention d'un organe de transmission de puissance 22, 24 annulaire dont un premier mode de réalisation de l'organe de transmission de puissance 22 est illustré aux figures 3A, 3B, 4A et 4B, et dont un second mode de réalisation, l'organe de transmission de puissance 24 est illustré aux figures 5, 6 et 7.

Dans chaque mode de réalisation l'organe de transmission de puissance 22, 24 annulaire comprend trois pièces annulaires coaxiales selon un axe longitudinal X, une première pièce annulaire 26a, 28a, une deuxième pièce annulaire 26b, 28b et une troisième pièce annulaire 26c, 28c. Dans chaque mode de réalisation, la première pièce 26a, 28a, et la troisième pièce annulaire 26c, 28c sont réalisées dans un matériau métallique d'une densité plus faible que la deuxième pièce annulaire 26b, 28b. Plus particulièrement, la première pièce 26a, 28a, et la troisième pièce annulaire 26c, 28c sont réalisées en alliage aluminium et la deuxième pièce annulaire 26b, 28b est réalisée en acier.

Dans le premier mode de réalisation, la première pièce annulaire 26a comprend un fût 12 tubulaire, un voile 16 annulaire comprenant une première paroi 30 annulaire interne sensiblement radiale raccordée à son extrémité radialement à une surépaisseur 32 annulaire en direction axiale. Une seconde paroi annulaire externe 34 s'étend radialement vers l'extérieur depuis une surface annulaire radialement externe 36 de la surépaisseur 32 annulaire. La surface annulaire radialement externe 36 de la surépaisseur 32 est sensiblement cylindrique. La seconde paroi annulaire radiale 34 comprend une face annulaire radiale 38 formant un épaulement annulaire dont l'intérêt apparait dans la suite de la description. On remarque que la seconde paroi annulaire radiale externe 34 comprend une face annulaire radialement externe 40 qui est sensiblement cylindrique et qui coopère avec la deuxième pièce annulaire 26b comme cela apparaitra également plus clairement ultérieurement. On comprend donc que le voile 16 de la première pièce annulaire 26a comporte la première paroi annulaire radiale 30, la surépaisseur 32 annulaire et la seconde paroi annulaire radiale 34.

La deuxième pièce annulaire 26b présente une section en forme de T selon un plan de coupe comprenant l'axe longitudinal. La deuxième pièce annulaire comprend une paroi annulaire radiale 42 raccordée à son extrémité radialement externe à une paroi cylindrique 44 portant des premiers moyens de transmission de couple 46a. Les premiers moyens de transmission de couple 46a peuvent être une denture 18 annulaire destinée à engrener avec une denture d'une autre pièce. La paroi cylindrique 44 comprend une face cylindrique radialement interne 48 qui est appliquée sur la face cylindrique 40 de la seconde paroi annulaire radiale 34 du voile 16 de la première pièce annulaire 26a. La paroi annulaire radiale 42 de la deuxième pièce annulaire 26b comprend une première face annulaire radiale 50 et un seconde face annulaire radiale 52, la première face annulaire radiale 50 étant appliquée sur la face annulaire radiale 38 formant l'épaulement annulaire de la première pièce 26a. La paroi annulaire radiale 42 de la deuxième pièce annulaire 26b comprend à son extrémité radialement interne une face cylindrique interne 54 qui est appliquée sur la face cylindrique 36 de la surépaisseur 32 de la première pièce annulaire 26a. En outre, cette paroi annulaire radiale 42 comprend une pluralité de logements 56 traversants longitudinalement.

Dans le cas particulier représenté aux figures 3A à 4B, les logements 56 sont des encoches et débouchent radialement vers l'intérieur. Ils sont de préférence régulièrement répartis circonférentiellement autour de l'axe longitudinal X.

Les butées radiales entre la première pièce annulaire 26a et la deuxième pièce annulaire 26b constituent des moyens de centrage de la deuxième annulaire 26b par rapport à la première pièce annulaire 26a.

La troisième pièce annulaire 26c comprend un anneau 58 portant une pluralité de doigt 60 répartis circonférentiellement autour de l'axe longitudinal X et formés en saillie sur une première face annulaire radiale 62 de l'anneau 58. Une fois les doigts 60 de la troisième pièce annulaire 26c insérée dans les logements 58 annulaires, ces derniers viennent en butée avec la paroi annulaire 38 radiale constituant l'épaulement de la première pièce annulaire 26a. Lorsque les doigts 60 sont insérés dans les logements 58, la première face annulaire radiale 62 portant les doigts 60 sera appliquée sur la seconde face 52 annulaire radiale de la paroi annulaire radiale 42 de la deuxième pièce annulaire 26b. L'anneau 58 de la troisième pièce annulaire 26c comprend en outre, une face cylindrique radialement interne 64 et une face cylindrique radialement externe 66. Une fois les doigts 60 insérés dans les logements 58, la face cylindrique interne 64 de la troisième pièce annulaire 26c est appliquée radialement sur la face cylindrique 36 de la surépaisseur 32 de la première pièce annulaire 26a et la face cylindrique externe 66 est appliquée radialement sur la face cylindrique interne 48 de la paroi cylindrique 44 de la deuxième pièce annulaire 26b.

La troisième pièce annulaire 26c comprend une seconde face annulaire radiale 68, axialement opposé à la première face annulaire radiale 62 portant des doigts 60. La seconde face annulaire radiale 68 de la troisième pièce annulaire 26c affleure une extrémité axiale 70 de la surépaisseur 32 de la première pièce 26a. Préférentiellement, l'extrémité 70 de la surépaisseur 32 est axialement opposée à la seconde paroi radiale 34 de la première pièce annulaire 26a. La seconde face annulaire radiale 68 de la troisième pièce annulaire 26c et l'extrémité axiale 70 de la surépaisseur 32 forment une continuité de surface sans décrochement.

Les première et troisième pièces annulaires 26a, 26c sont soudées ensemble bord à bord au niveau de la butée radiale entre la face cylindrique interne 64 de la troisième pièce 26c et la face cylindrique de la surépaisseur 32 de la première pièce annulaire 26a.

La soudure bord à bord est par friction malaxage. Cette soudure implique qu'il n'y ait pas de cordon de soudure au niveau des faces affleurantes de la première et la troisième pièces annulaires 26a, 26c. La soudure bord à bord des première et troisième pièces annulaires 26a, 26c empêche ainsi tout déplacement axiale de la deuxième pièce annulaire 26b qui est axialement en butée avec ces dernières.

Les doigts 60 de la troisième pièce annulaire 26c, qui sont en butée axiale avec la face annulaire radiale 38 formant l'épaulement de la première pièce annulaire 26a, présentent chacun une face radiale 72 qui est soudée à la face annulaire radiale 38 formant l'épaulement de la première pièce annulaire 26a.

Cette soudure est préférentiellement une soudure par friction malaxage par transparence qui consiste à insérer un mandrin au travers de la première pièce 26a annulaire jusqu'à venir en contact avec les extrémités 72 des doigts 60 et ainsi les souder ensemble.

Une fois les première et troisième pièces annulaires 26a, 26c soudées, les doigts 60 de la troisième pièce 26c insérés dans les logements 58 de la deuxième pièce 26b permettent d'empêcher toute rotation de la deuxième pièce 26b par rapport aux première et troisième pièce 26a, 26c selon l'axe longitudinal X.

Dans le cas particulier représenté aux figures 3A à 4B, la deuxième pièce annulaire 26b comprend trois logements 58 et la troisième pièce annulaire 26c comprend trois doigts 60 coopérant chacun, avec un des logements 58.

Dans le second mode de réalisation, l'organe de transmission de puissance 24 comprend un fût 12 qui est formé par une première pièce annulaire 28a, une deuxième pièce annulaire 28b et une troisième pièce annulaire 28c.

La première pièce annulaire 28a comprend une paroi tubulaire 74. La paroi tubulaire présente une face cylindrique interne 76. La face cylindrique interne 76 comprend une première face cylindrique interne 76a et une seconde face cylindrique interne 76b. Les première et seconde faces cylindriques internes 76a, 76b sont reliées l'une à l'autre par une paroi annulaire radiale 78, formant un épaulement avec la seconde paroi cylindrique interne 76b, dont l'intérêt apparait dans la suite de la description.

La deuxième pièce annulaire 28b comprend une paroi tubulaire 80 dont la face cylindrique interne porte des seconds moyens de transmission de couple 46b. Les seconds moyens de transmission de couple 46b peuvent être des cannelures 14 destinées à coopérer avec des cannelures correspondantes d'un arbre. La paroi tubulaire 80 comprend une face cylindrique radialement externe 84 qui est appliquée sur la seconde face cylindrique 76b de la première pièce annulaire 28a. La deuxième pièce annulaire 28b comprend également une première face annulaire radiale 86 qui est appliquée sur la paroi annulaire radiale 78 formant l'épaulement de la première pièce 28a. La deuxième pièce annulaire 28b comprend une seconde face annulaire radiale 88, axialement opposée à la première face annulaire radiale 86. La seconde face annulaire radiale 88 comporte une pluralité de logements 90 borgnes s'étendant axialement. Les logements 90 borgnes débouchent radialement vers l'extérieur.

La troisième pièce annulaire 28c comprend un anneau 92 portant une pluralité de doigts 94 répartis circonférentiellement autour de l'axe longitudinal X et formés en saillie sur une face annulaire radiale 96 de l'anneau 92. L'anneau 92 comprend également une face cylindrique radialement interne 98 et une face cylindrique radialement externe 100. Les doigts 94 présentent respectivement une face cylindrique 102 externe qui s'étend axialement dans le prolongement de la face cylindrique externe 100 de l'anneau 92 de la troisième pièce annulaire 28c.

Une fois les doigts 94 de la troisième pièce annulaire 28c insérés dans les logements 90 borgnes de la deuxième pièce annulaire 28b, la face annulaire radiale 96 portant les doigts 94 vient axialement en butée sur la seconde face annulaire radiale 88 de la deuxième pièce annulaire 28b, munie des logements 90 borgnes. La face cylindrique externe 102 des doigts 94 et la face cylindrique externe 100 de l'anneau 92 de la troisième paroi annulaire 28c viennent annulairement en butées radiale sur la seconde face cylindrique interne 76b de la première pièce annulaire 28a.

Les faces cylindriques externes 100, 102 des doigts 94 et de l'anneau 92 de la troisième pièce annulaire 28c sont soudées à la seconde face cylindrique interne 76b de la première pièce annulaire 28a. Cette soudure est préférentiellement une soudure par friction malaxage par transparence.

Le mandrin suit ainsi préférentiellement un pourtour 104 des zones de butée radiale entre les première et troisième pièces annulaires 28a, 28c, comme représenté en figure 7.

La soudure des première et troisième pièces annulaires 28a, 28c empêche ainsi tout déplacement axial de la deuxième pièce 28b annulaire qui est axialement en butée avec ces dernières.

La présence des doigts 94 de la troisième pièce 28c insérés dans les logements 90 de la deuxième pièce 28b permet d'empêcher toute rotation de la deuxième pièce 28b par rapport aux première et troisième pièces annulaires 28a, 28c selon l'axe longitudinal X.

Dans une réalisation non représentée sur les figures, l'organe de transmission 22, 24 de puissance pourrait comprendre des premiers moyens de transmission de couple 46a selon le premier mode de réalisation et des seconds moyens de transmission de couple 46b selon le second mode de réalisation.

## Revendications

1. Organe annulaire de transmission de puissance (22, 24) d'axe longitudinal comprenant une première pièce annulaire (26a, 28a), une deuxième pièce annulaire (26b, 28b) comprenant des moyens de transmission (46a, 46b) de couple et une troisième pièce annulaire (26c, 28c) solidaires les unes des autres, la première pièce annulaire (26a, 28a) et la troisième pièce (26c, 28c) annulaires étant réalisées dans un matériau métallique d'un premier type, la deuxième pièce annulaire (26b, 28b) étant réalisée dans un matériau métallique d'un second type ayant une densité supérieure à la densité du matériau métallique du premier type, la deuxième pièce (26b, 28b) annulaire étant bloquée longitudinalement entre la première pièce annulaire (26a, 28a) et la troisième pièce annulaire (26c, 28c) et radialement sur au moins l'une de la première pièce annulaire (26a, 28a) et de la troisième pièce annulaire (26c, 28c),.

2. Organe selon la revendication 1, dans lequel la première pièce annulaire (26a, 28a) est en contact avec la troisième pièce annulaire (26c, 28c) et fixée directement à celle-ci, de préférence soudée à celle-ci.

3. Organe selon la revendication 1 ou 2, dans lequel la soudure de la première pièce (26a, 28a) à la troisième pièce (26c, 28c) est réalisée par friction malaxage.

4. Organe selon l'une des revendications 1 à 3, dans lequel la deuxième pièce (26b, 28b) coopère par liaison de forme avec au moins l'une de la première pièce (26a, 28a) et de la troisième pièce (26c, 28c) pour le blocage en rotation de la deuxième pièce (26b, 28b) avec les première et troisième pièces (26a, 26c, 28a, 28c).

5. Organe selon la revendication 4, dans lequel la troisième pièce (26c, 28c) comprend une partie annulaire (64, 100, 102) en contact annulaire radial avec la première pièce annulaire (26a, 28a) et portant des doigts (60, 94) engagés dans des logements (56,90) de la deuxième pièce annulaire (26b, 28b).

6. Organe selon l'une des revendications 1 à 5, dans lequel la première pièce annulaire (26a, 28a) comprend un épaulement (40) annulaire sur lequel la deuxième pièce (26b, 28b) annulaire est appliquée longitudinalement, la troisième pièce annulaire (28a,28b) étant agencée longitudinalement à l'opposé de l'épaulement par rapport à la deuxième pièce annulaire (26b, 28b).

7. Organe selon les revendications 5 et 6, dans lequel les doigts (60) traversent la deuxième pièce annulaire (26b), les extrémités (72) des doigts (60) étant soudées sur l'épaulement annulaire.

8. Organe selon l'une des revendications précédentes, dans lequel les moyens de transmission de couple (46a) sont orientés radialement vers l'extérieur, la troisième pièce annulaire (26c) entourant une surface cylindrique (36) de la première pièce annulaire (26a) et fixée par soudure à celle-ci.

9. Organe selon la revendication 8, dans lequel la troisième pièce annulaire (26c) comprend un bord annulaire (64) soudé à un bord annulaire (36) de la première pièce annulaire (26a).

10. Organe selon l'une des revendications précédentes, dans lequel les moyens de transmission de couple (46b) sont orientés radialement vers l'intérieur, la troisième pièce annulaire (28c) étant montée à l'intérieur d'une surface cylindrique (72, 72b) de la première pièce (28a) et fixée par soudure à celle-ci.

11. Organe selon l'une des revendications précédentes **caractérisé en ce que** le matériau métallique du premier type est un alliage d'aluminium.

12. Organe selon l'une des revendications précédentes **caractérisé en ce que** le matériau métallique du second type est un acier.

## Patentansprüche

1. Ringförmiges Kraftübertragungselement (22, 24) mit Längsachse, das ein erstes ringförmiges Teil (26a, 28a), ein zweites ringförmiges Teil (26b, 28b) mit Drehmomentübertragungsmitteln (46a, 46b) und ein drittes ringförmiges Teil (26c, 28c) umfasst, die fest miteinander verbunden sind, wobei das erste ringförmige Teil (26a, 28a) und das dritte ringförmige Teil (26c, 28c) aus einem metallischen Material eines ersten Typs hergestellt sind, und das zweite ringförmige Teil (26b, 28b) aus einem metallischen Material eines zweiten Typs mit einer Dichte größer der Dichte des metallischen Materials des ersten Typs, wobei das zweite ringförmige Teil (26b, 28b) in Längsrichtung zwischen dem ersten ringförmigen Teil (26a, 28a) und dem dritten ringförmigen Teil (26c, 28c) und in radialer Richtung auf mindestens einem ersten ringförmigen Teil (26a, 28a) und dem dritten ringförmigen Teil (26c, 28c) blockiert ist.

2. Element nach Anspruch 1, in dem das erste ringförmige Teil (26a, 28a) in Kontakt mit dem dritten ringförmigen Teil (26c, 28c) steht und direkt an diesem befestigt, vorzugsweise mit diesem verschweißt ist.

3. Element nach Anspruch 1 oder 2, in dem das Verschweißen des ersten Teils (26a, 28a) mit dem dritten Teil (26c, 28c) durch Reibrühren erfolgt.

4. Element nach einem der Ansprüche 1 bis 3, in dem das zweite Teil (26b, 28b) mit mindestens einem ersten Teil (26a, 28a) und dem dritten Teil (26c, 28c) formschlüssig zusammenwirkt, um das zweite Teil (26b, 28b) mit dem ersten und dritten Teil (26a, 26c, 28a, 28c) drehfest zu blockieren.

5. Element nach Anspruch 4, in dem das dritte Teil (26c, 28c) einen ringförmigen Abschnitt (64, 100, 102) umfasst, der in radialem ringförmigen Kontakt mit dem ersten ringförmigen Teil (26a, 28a) steht und Finger (60, 94) aufweist, die in Aufnahmen (56, 90) des zweiten ringförmigen Teils (26b, 28b) eingreifen.

6. Element nach einem der Ansprüche 1 bis 5, in dem das erste ringförmige Teil (26a, 28a) eine ringförmige Schulter (40) umfasst, auf der das zweite ringförmige Teil (26b, 28b) in Längsrichtung anliegt, wobei das dritte ringförmige Teil (28a, 28b) in Bezug auf das zweite ringförmige Teil (26b, 28b) in Längsrichtung gegenüber der Schulter angeordnet ist.

7. Element nach Anspruch 5 und 6, in dem die Finger (60) durch das zweite ringförmige Teil (26b) führen, wobei die Enden (72) der Finger (60) mit der ringförmigen Schulter verschweißt sind.

8. Element nach einem der vorhergehenden Ansprüche, in dem die Drehmomentübertragungsmittel (46a) radial nach außen gerichtet sind, wobei das dritte ringförmige Teil (26c) eine zylindrische Fläche (36) des ersten ringförmigen Teils (26a) umgibt und mit dieser verschweißt ist.

9. Element nach Anspruch 8, in dem das dritte ringförmige Element (26c) einen ringförmigen Rand (64) umfasst, der mit einem ringförmigen Rand (36) des ersten ringförmigen Teils (26a) verschweißt ist.

10. Element nach einem der vorhergehenden Ansprüche, in dem die Drehmomentübertragungsmittel (46b) radial nach innen gerichtet sind, wobei das dritte ringförmige Teil (28c) an der Innenseite einer zylindrischen Fläche (72, 72b) des ersten Teils (28a) montiert und mit dieser verschweißt ist.

11. Element nach einem der vorhergehenden Ansprüche, **dadurch gekennzeichnet, dass** das metallische Material des ersten Typs eine Aluminiumlegierung ist.

12. Element nach einem der vorhergehenden Ansprüche, **dadurch gekennzeichnet, dass** das metallische Material des zweiten Typs Stahl ist.

## Claims

1. An annular power transmission element (22, 24) having a longitudinal axis comprising a first annular part (26a, 28a), a second annular part (26b, 28b) comprising torque transmission means (46a, 46b) and a third annular part (26c, 28c) integral with each other, the first annular part (26a, 28a) and the third annular part (26c, 28c) being made of a first type of metallic material, the second annular part (26b, 28b) being made of a second type of metallic material having a density greater than the density of the first type of metallic material, the second annular part (26b, 28b) being locked longitudinally between the first annular part (26a, 28a) and the third annular part (26c, 28c) and radially on at least one of the first annular part (26a, 28a) and the third annular part (26c, 28c).

2. An element according to claim 1, wherein the first annular part (26a, 28a) is in contact with the third annular part (26c, 28c) and directly attached thereto, preferably welded thereto.

3. An element according to claim 1 or 2, wherein the welding of the first part (26a, 28a) to the third part (26c, 28c) is a friction stir welding.

4. An element according to one of claims 1 to 3, wherein the second part (26b, 28b) cooperates by positive fitting with at least one of the first part (26a, 28a) and the third part (26c, 28c) for the rotational locking of the second part (26b, 28b) with the first and third parts (26a, 26c, 28a, 28c).

5. The element according to claim 4, wherein the third part (26c, 28c) comprises an annular portion (64, 100, 102) in radial annular contact with the first annular part (26a, 28a) and carrying fingers (60, 94) engaged in housings (56, 90) of the second annular part (26c, 28c).

6. An element according to one of claims 1 to 5, wherein the first annular part (26a, 28a) comprises an annular shoulder on which the second annular part (26b, 28b) is longitudinally applied, the third annular part (28a, 28b) being longitudinally arranged opposite the shoulder (40) with respect to the second annular part (26b, 28b).

7. An element according to claims 5 and 6, wherein the fingers (60) pass through the second annular part (26b), the ends (72) of the fingers (60) being welded to the annular shoulder.

8. An element according to one of the preceding claims, wherein the torque transmission means (46a) is oriented radially outward, the third annular part (26c) surrounding a cylindrical surface (36) of the first annular part (26a) and welded thereto.

9. An element according to claim 8, wherein the third annular part (26c) comprises an annular edge (64) welded to an annular edge (36) of the first annular part (26a).

10. An element according to one of the preceding claims, wherein the torque transmission means (46b) is oriented radially inward, the third annular part (28c) being mounted within a cylindrical surface (72, 72b) of the first part (28a) and welded thereto.

11. An element according to one of the preceding claims, **characterized in that** the metallic material of the first type is an aluminium alloy.

12. An element according to one of the preceding claims, **characterized in that** the metallic material of the second type is steel.
